# EUROPEAN PATENT SPECIFICATION

(11) **EP 2 906 767 B1**
(45) Date of publication and mention of the grant of the patent: **19.07.2023**
(21) Application number: 13845021.8
(22) Date of filing: 11.10.2013
(51) Int. Cl.: E05G 1/024, E06B 5/11, E06B 3/70

(54) **INTRUSION PREVENTION ARRANGEMENT COMPRISING A SAW PREVENTION LAYER, A USE OF A SAW PREVENTION LAYER, AND A PANEL FOR A VEHICLE COMPRISING AN INTRUSION PREVENTION ARRANGEMENT.**
EINBRUCHVERHÜTUNGSANORDNUNG MIT EINER SÄGEVERHINDERUNGSSCHICHT, VERWENDUNG EINER SÄGEVERHINDERUNGSSCHICHT UND PLATTE FÜR EIN FAHRZEUG MIT EINER EINBRUCHVERHÜTUNGSANORDNUNG
DISPOSITIF DE PRÉVENTION D'INTRUSION COMPRENANT UNE COUCHE DESTINÉE À PRÉVENIR UN SCIAGE, UTILISATION D'UNE COUCHE DESTINÉE À PRÉVENIR UN SCIAGE, ET PANNEAU POUR VÉHICULE COMPRENANT UN DISPOSITIF DE PRÉVENTION D'INTRUSION

(30) Priority: 11.10.2012 SE 1251153
(43) Date of publication of application: 19.08.2015
(73) Proprietor: Engtex AB, 523 90 Ulricehamn (SE)
(72) Inventor: ENG, Torbjörn, 565 32 Mullsjö (SE); WINDELL, Magnus, 523 31 Ulricehamn (SE); JOHANSSON, Patrik, 523 38 Ulricehamn (SE)
(74) Representative: Bergenstråhle & Partners AB
(86) International application number: PCT/SE2013/051194
(87) International publication number: WO 2014/058384

(56) References cited:
- EP-A1- 0 726 140
- WO-A1-91/11122
- FR-A1- 2 557 190
- SE-B- 464 273
- US-A- 5 385 774
- US-A- 5 415 007
- US-A- 5 415 007
- US-A- 5 545 470
- US-A- 5 770 530
- US-A- 5 770 530
- US-B1- 6 338 887

## Description

### Technical field

The present invention relates generally to an intrusion prevention arrangement. More specifically, the present invention relates to an intrusion prevention arrangement for preventing intrusion from cutting devices and from power-driven sawing devices. The present invention further relates to a use of a saw prevention layer of textile fabric as an intrusion prevention arrangement, and to a panel for a vehicle, such as a truck, comprising such an intrusion prevention arrangement.

### Background art

For protecting articles that are liable to be stolen, which are stored in a certain space, such as in a truck, building, shop, boat, trailer, mobile home, camping trailer or container, the space can be equipped with, or surrounded with, an intrusion prevention arrangement having a cut prevention layer. The intrusion prevention arrangement can be arranged in a truck panel, a hard cover, a door etc. The cut prevention layer may be of a hard material that makes it impossible or at least difficult to cut through, such as a steel door layer, or a layer of any hard material such as hard plastic, composite, wood, any metal such as aluminum etc. Published patent application FR2557190 concerns an intrusion prevention wall or door comprising an outer layer of wood 11 reinforced by a sheet of metal 12, a first plate 20 having a large resistance against sawing, preferably of glass, and a second plate 30 of a material with high rigidity against dents from impacts.

Recently, intruders have started using power-driven saws, such as chain saws and circular saws, equipped with saw teeth of such a hard material that the power-driven saw can saw its way through the cut-prevention layer. Thereby the intruders can easily get access to the articles liable to be stolen.

Consequently, there is a need for an intrusion prevention arrangement that can protect a space from attacks from both cutting devices, such as knives, and power-driven sawing devices, such as chain saws.

### Summary of invention

It is an object of the invention to address at least some of the problems and issues outlined above. It is possible to achieve these objects and others by using a method and an apparatus as defined in the attached independent claims.

According to one aspect, an intrusion prevention arrangement is provided comprising a cut prevention layer of a hard material that is impossible or at least difficult to cut through, and a saw prevention layer of a textile fabric. The saw prevention layer comprises an active layer of threads that, upon contact with saw teeth of a power-driven saw, are arranged to be engaged by the saw teeth and a passive layer of threads. The threads of the passive layer interconnects the threads of the active layer, wherein the threads of the active layer have such a length and strength that they cause the threads of the passive layer to break in case the threads of the active layer are caught by saw teeth of a power-driven saw

Thereby, the threads of the active layer clog the saw blade and arrest the power-driven saw. Further, the cut prevention layer is of a hard material that is impossible or at least difficult to cut through with a cutting device. In other words, the cut prevention layer prevents cutting through the intrusion prevention arrangement with a cutting device. Consequently, the intruder cannot work himself through the intrusion prevention arrangement, neither with a cutting device nor a power-driven sawing tool.

The hard material of the cut prevention layer is wood or any metal. The cutting device may be any device used for cutting, such as a knife, a hand-driven saw, a pair of scissors etc. A power-driven saw may be a saw with a rotating blade, i.e. rotating saw-teeth, such as a chain-saw. The cut-prevention layer and the saw prevention layer are separate layers.

Further possible features and benefits of this solution will become apparent from the detailed description below.

### Brief description of drawings

The invention is now described, by way of example, with reference to the accompanying drawings, in which:
Fig. 1 is a schematic block diagram of an intrusion prevention arrangement according to an embodiment.
Figure 2 is another schematic block diagram of an intrusion prevention arrangement according to an embodiment.
Figure 3 is a front view of a saw-prevention arrangement comprising an envelope and a saw prevention layer of figure 8, wherein a part of the envelope has been taken away to reveal the saw-prevention layer.
Figures 4-8 are front views of examples of saw-prevention layers of textile fabric that may be used in an intrusion prevention arrangement according to the invention.

### Description of embodiments

The present invention is based on an idea of using a fabric for work-clothes, such as described in US 5415007, which in the work-clothes serves as a protection against injuries that may be caused by a power-driven chain saw, for intrusion prevention purposes instead.

The invention is realized by an intrusion prevention arrangement comprising a cut-prevention layer of a hard material that is impossible or at least difficult to cut through and a saw-prevention layer of textile fabric, the saw-prevention layer comprising an active layer of threads that, upon contact with saw teeth of a power-driven saw, are arranged to be engaged by the saw teeth.

Intrusion prevention arrangements for e.g. truck panels have historically had a cut-prevention layer of a hard material, e.g. an aluminum sheet. According to the invention, such a cut-prevention layer is combined with a saw-prevention layer according to above. Tests of such an intrusion prevention arrangement have shown that when a power-driven saw works through the cut-prevention layer, the threads of the active layer of the saw-prevention layer are caught by the saw teeth and torn out. Thereby, the threads of the active layer clog the saw blade and arrest the power-driven saw. Consequently, the intruder cannot work himself through the intrusion prevention arrangement. On the other hand, if the intruder uses a cutting tool, the cut-prevention layer would stop him from working through the intrusion prevention arrangement.

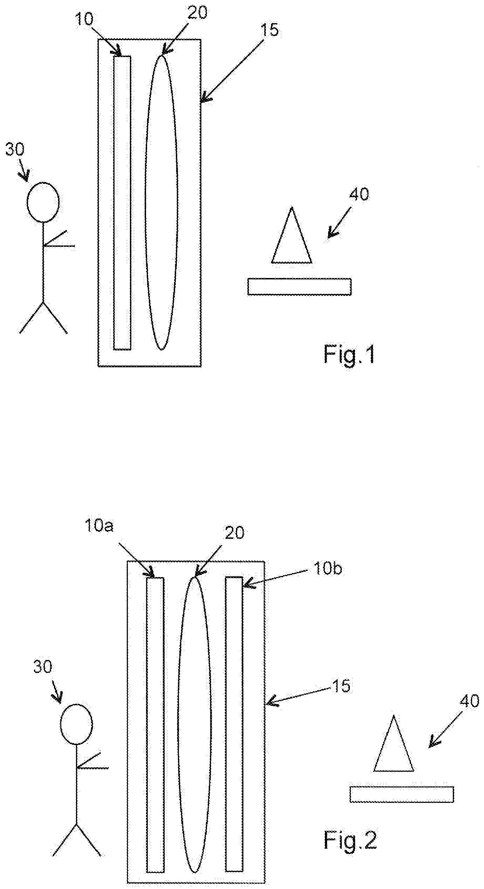

Figure 1 shows an intrusion prevention arrangement 15 according to an embodiment of the invention. The intrusion prevention arrangement 15 comprises a cut-prevention layer 10 of a hard material and a saw-prevention layer 20 of textile fabric, the saw-prevention layer comprising an active layer of threads that, upon contact with saw teeth of a power-driven saw, are arranged to be engaged by the saw teeth. The different shapes of the saw-prevention layer and the cut-prevention layer in the figures do not resemble the shapes of the layers. Instead, they are only used to better distinguish the cut-prevention layer 10 from the saw-prevention layer 20.

The saw-prevention layer 20 is preferably arranged close to the cut-prevention layer 10, preferably on the inside of the cut-prevention layer. The inside is the side of the cut-prevention layer 10 that faces away from a possible intruder 30 that wants to reach valuable goods 40 arranged inside the intrusion prevention arrangement 15 such that the intruder first has to force the cut-prevention layer 10 before reaching the saw-prevention layer 20. By the saw-prevention layer 20 being arranged close to the cut-prevention layer 10 is meant that when a power-driven saw works its way through the cut-prevention layer, the saw would more or less immediately after breaking the cut-prevention layer come into contact with the saw-prevention layer, which would arrest the saw blade. Although, the saw-prevention layer 20 should not be so tightly arranged to the cut-prevention layer 10 that the threads of the active layer is prevented from moving freely. If the threads cannot move freely there is a risk that the threads are not torn out by the saw teeth to clog the saw blade but instead are broken by the saw teeth.

The intrusion prevention arrangement 15 can be arranged in or as a truck panel, a hard cover for a truck, a motor boat, a door of a building or shop, e.g. a slide able door, a trailer, as a wall or door of a mobile home, camping trailer, container etc.

Figure 2 shows an alternative of an intrusion prevention arrangement 15 in which the saw-prevention layer 20 is arranged in between two cut-prevention layers 10a, 10b.

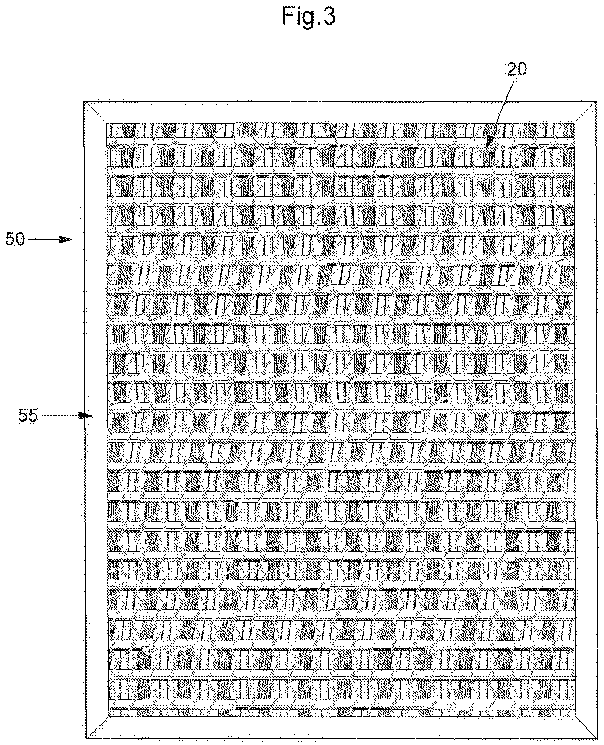

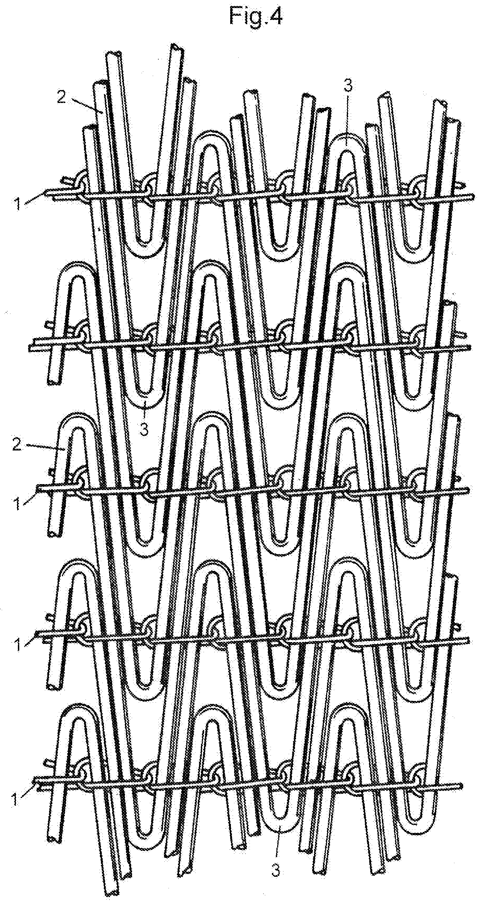

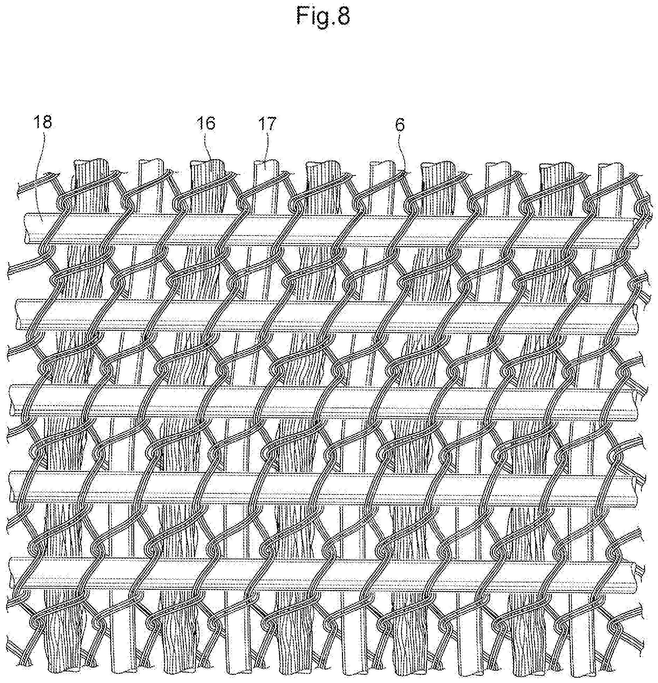

Figure 3 shows a saw-prevention layer 20 arranged inside an envelope 50. A front part of the envelope 50 has been taken away in the picture to reveal the saw-prevention layer 20 arranged inside the envelope 50. Consequently, the envelope may enclose the saw-prevention layer 20. The envelope 50 may be arranged with fastening edges 55 around its periphery. The fastening edges 55 may be arranged for connection with the cut-prevention layer 10, e.g. with similar edges (not shown) of the cut-prevention layer. Edges of the saw-prevention layer 20 may be fastened to the fastening edges 55 of the envelope, to keep the saw-prevention layer in place in the envelope. The saw-prevention layer 20 should be fastened to the envelope such that the threads of the active layer are not tensioned. The envelope 50 should preferably be arranged such that it permits the threads of the active layer to move inside the envelope. The edges of the saw-prevention layer 20 may be fastened to the edges 55 of the envelope 50 by sewing (e.g. zig-zag pattern) or by melting of a plastic material arranged on the edges and pressing the edges of the envelope 50 together with the edges of the saw-prevention layer 20. The envelope 50 may have an inner surface of a slide able material such as aluminum or similar that facilitates the threads of the saw-prevention layer 20 to move freely inside the envelope. The envelope 50 may be adapted in size to fit the size of a cut-prevention layer 10 with which it is going to coexist in the same intrusion prevention arrangement 15. E.g. the envelope may be adapted in size to a side of a truck or trailer panel. In fig. 3 the saw-prevention layer 20 shown is a saw-prevention layer of textile fabric of a type according to fig. 8. Although, any type of saw-prevention layer may be used. The details of different suitable saw-prevention layers 20 will be shown and explained in relation to figures 4-8.

Figure 4 shows an exemplary saw-prevention layer 20 of textile fabric. In the fabric illustrated in figure 4, thin-diameter threads 1 form a passive layer, and the larger-diameter threads 2 form an active layer. The passive layer may also be called a binding layer or system. A function of the passive layer is to bind the active layer. The active layer may be a warp and weft system. The textile fabric may be a warp knit fabric/ Weft inserted warp knit. Alternatively, the textile may be produced according to a circular knit or weft knit process, or the textile may be a woven or non-woven textile. The passive thread layer 1 supports the active thread layer 2 and does not actively take part in arresting the saw. The threads forming the active layer extend in a tortuous or serpentine pattern 3. The active thread layer 2 may be positioned on top of the passive thread layer 1, i.e. against a possible intruder. Consequently, the threads of the active layer will, when the saw-prevention layer is reached by a saw, instantaneously be caught by the saw chain upon their contact with the chain and be pulled out.

This embodiment may be modified in a many different ways. The passive thread layer 1 may be formed by threads that maintain the threads of the active thread layer 2 in position when the saw-prevention layer 20 is positioned in an intrusion prevention arrangement 15. Further, the threads of the active-thread layer 2 may have such a length and may be connected to the passive-thread layer such that they will take on a tortuous pattern allowing them to be captured by the saw chain upon contact with the saw chain. Further, the threads of the active-thread layer 2 may be sufficiently strong to cause the threads of the passive-thread layer 1 to break such that the threads of the active layer may be torn out and arrest the saw chain. Further, the threads of the active layer may be texturized.

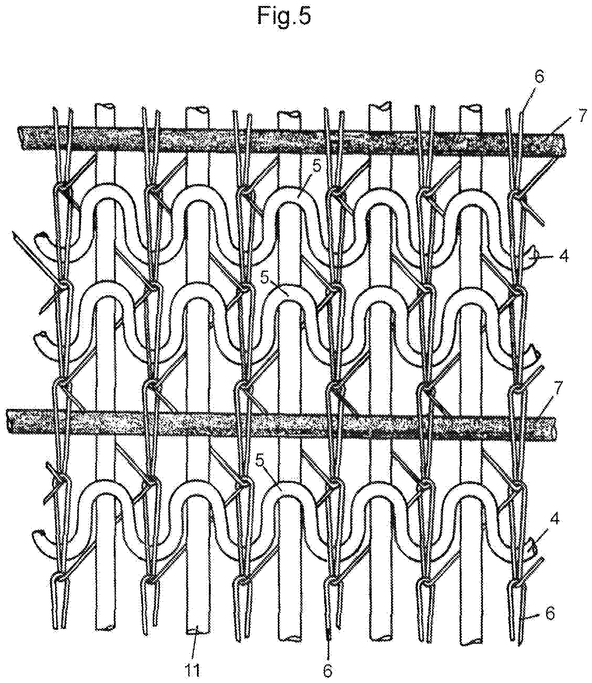

Fig. 5 illustrates another type of fabric, wherein the threads of the active layer 4 form a tortuous or serpentine pattern 5. The threads of the active layer may be a coarse yarn. Like in the embodiment illustrated in fig. 4 a passive layer of binder threads 6 are formed. In the embodiment of fig. 5 there are also threads 7 which are shrinkable, for instance by being exposed to heat treatment. The threads 7 are also bound to the passive layer. By shrinking the threads 7, the active layer threads 4, which consist of a non-shrinking material, will take on a tortuous pattern 5 having the same function as the tortuous pattern 3 of the threads in accordance with the embodiment of fig. 4. In the embodiment of fig. 5 there are also threads 11 arranged perpendicular to the threads 7. The threads 11 may or may not be made of a shrinkable material. In the case that the threads 11 are of a shrinkable material, and if the shrinkable threads 11 are shrunk, existing active threads (not shown) arranged in parallel to the threads 11 may take on a tortuous pattern. Alternatively, the threads 11 may consist of a mixture of shrinkable threads and non-shrinkable threads. As a result, the active layer may, after shrinking of the shrinkable threads, comprise threads taking on a tortuous pattern in two mutually perpendicular directions.

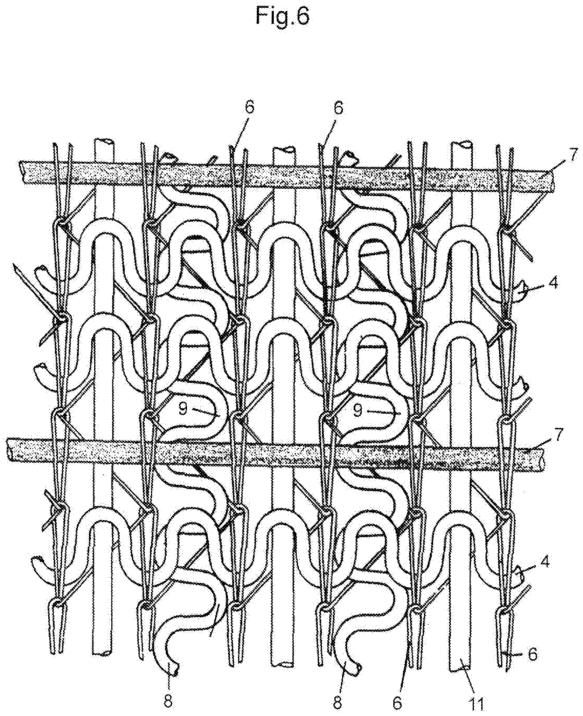

Fig. 6 shows yet another type of fabric, which is similar to the embodiment of figure 5 in as much as it comprises threads 7 of a shrinkable material. Also, this embodiment comprises a passive layer formed by threads 6, shown as thin threads in the figure, and serving as binder threads for binding, or connecting, the active threads to the passive threads. The embodiment of fig. 6 also comprises threads 8 of a non-shrinkable material, similar to the threads 4 of the active layer, but arranged perpendicular to the threads 4. Threads 11 of shrinkable material are arranged more or less perpendicular to the threads 7 of shrinkable material. By shrinking the shrinkable threads 11, also the threads 8 of non-shrinkable material will take on a tortuous or serpentine configuration 9, the tortuous portions of which may be caught by the saw chain upon contact with the latter. As understood, figure 6 shows the fabric when the threads 7 and 11 of shrinkable material have been shrunk such that the non-shrinkable threads of the active layers 4 and 8 have taken on a tortuous or serpentine configuration.

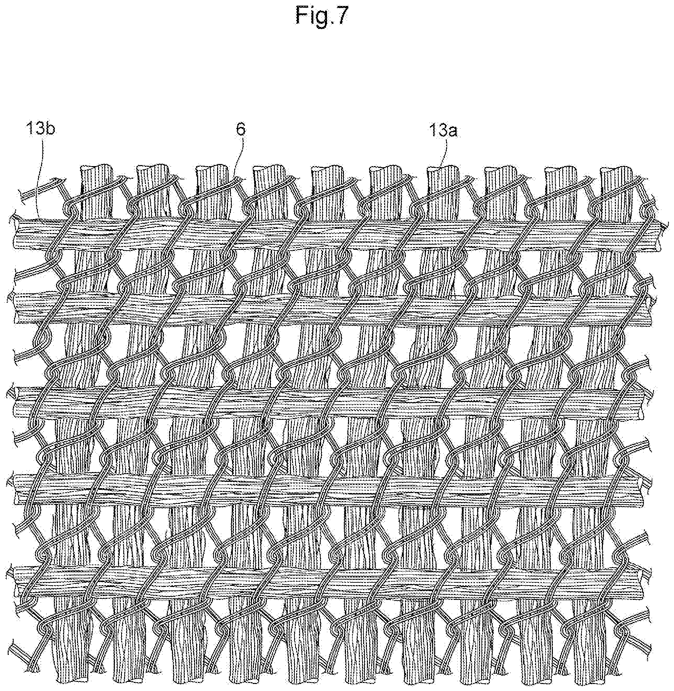

Figure 7 shows an alternative type of fabric in which threads 13a, 13b of the active layer are texturized. Each thread may comprise up to 200, or even more, filaments, more or less each filament being ruffled to achieve the texturized layer. The threads may be texturized according to any known method. In figure 7 there are active layer threads 13a that are texturized, and that elongates in a first direction and there are active layer threads 13b that are texturized, and that elongates in a second direction perpendicular to the first direction. The texturized threads 13a, 13b are connected to the passive layer threads 6 in a similar way as for the other embodiments shown in figures 4-6. The passive layer threads 6 may function as a binding system that binds and holds the active layer threads 13a, 13b together.

Figure 8 shows another alternative type of fabric in which the active layer comprises texturized threads 16 mixed with non-texturized threads 17. The texturized threads 16 and the non-texturized threads 17 may or may not take on a tortuous pattern. In the alternative shown in the figure, every second thread 16 is texturized and every second thread 17 is a non-texturized thread. Although, other alternative mixtures may be used. The active layer may also comprise threads 18 that are arranged perpendicular to the threads 16 and 17. The threads 18 of fig. 8 are not texturized. Although, the threads 18 may be texturized. Alternatively, the threads 18 may comprise texturized threads mixed with non-texturized threads, as for the threads 16 and 17.

The material of the threads of the saw-prevention layer may be of for example any type of polymer, such as polyester, polyamide, polyethylene, polypropylene and aromatic polyamide fiber, or a mixture of any of the polymers.

In an alternative, each active layer thread may comprise a number of filaments, and each active layer thread may be enclosed by a protective sleeve. Thereby, each active layer thread becomes more robust, which makes the thread last longer at regular usage of the intrusion prevention arrangement. At the same time, the protective sleeve is produced such that it is easily and instantaneously torn up by the saw teeth of a power-driven saw so that the saw teeth gets in contact with the filaments of the active thread.

According to an embodiment, the threads of the active layer are made to extend in a serpentine or tortuous pattern as a result of the binding pattern to the threads of the passive layer.

According to another embodiment, the threads of the active layer are made to extend in a serpentine or tortuous pattern as a result of shrinkage of the shrinkable threads 7 included in the passive layer.

According to another embodiment, the threads of the active layer are made to extend in a serpentine or tortuous pattern as a result of the inclusion in the passive layer of elastic threads. In other words, the shrinkable threads may be elastic threads.

The saw-prevention layer may comprise many sub-layers, for example 3-12, wherein each sub-layer comprises an active layer of threads and a passive layer of threads, wherein the threads of the passive layer interconnects the threads of the active layer. Further, the cut prevention layer may comprise many sub-layers. Also, it is possible that sub-layers of the saw-prevention layer are alternated with sub-layers of the cut-prevention layer, such that there is a mixture of saw-prevention sub-layers and cut-prevention sub-layers.

While the solution has been described with reference to specific exemplary embodiments, the description is generally only intended to illustrate the inventive concept and should not be taken as limiting the scope of the solution. The solution is defined by the appended claims.

## Claims

1. An intrusion prevention arrangement (15), comprising:
a cut prevention layer (10) of a hard material that is impossible or at least difficult to cut through, the hard material being wood or any metal;
a saw prevention layer (20) of a textile fabric, wherein the saw prevention layer comprises
an active layer of threads (2; 4; 4,8; 13a, 13b; 16, 17, 18) that, upon contact with saw teeth of a power-driven saw, are arranged to be engaged by the saw teeth, and
a passive layer of threads (1; 6),
**characterized in that**
the threads of the passive layer (1; 6) interconnects the threads of the active layer (2; 4; 4,8; 13a, 13b; 16, 17, 18), wherein the threads of the active layer have such a length and strength that they cause the threads of the passive layer to break in case the threads of the active layer are caught by saw teeth of a power-driven saw.

2. Intrusion prevention arrangement according to claim 1, wherein the threads of the passive layer (1; 6) interconnects the threads of the active layer (2; 4; 4, 8; 13a, 13b; 16, 17, 18) in such a way that the threads of the active layer are forced to extend in a serpentine or tortuous pattern.

3. Intrusion prevention arrangement (15) according to claim 1 or 2, wherein the threads of the active layer are texturized.

4. Intrusion prevention arrangement (15) according to any of claims 1-3, wherein the active layer of threads comprises first threads (4) arranged to extend in a first direction and second threads (8) arranged perpendicular to the first threads (4), and wherein at least the second threads are non-shrinkable.

5. Intrusion prevention arrangement (15) according to any of claims 1-3, further comprising an envelope (50), and wherein the saw prevention layer (20) is positioned inside the envelope (50).

6. A panel for a vehicle, such as a truck, comprising an intrusion prevention arrangement (15) according to any of claims 1-5.

## Patentansprüche

1. Einbruchsverhütungsanordnung (15), umfassend:
eine Schnittverhinderungsschicht (10) aus einem harten Material, das unmöglich oder mindestens schwer zu durchtrennen ist, wobei das harte Material Holz oder ein beliebiges Metall ist;
eine Sägeverhinderungsschicht (20) aus einem Textilgewebe, wobei die Sägeverhinderungsschicht umfasst:
eine aktive Schicht aus Fäden (2; 4; 4,8; 13a, 13b; 16, 17, 18), die bei Kontakt mit Sägezähnen einer kraftbetriebenen Säge so angeordnet sind, dass sie durch die Sägezähne erfasst werden, und
eine passive Schicht aus Fäden (1; 6),
**dadurch gekennzeichnet, dass**
die Fäden der passiven Schicht (1; 6) die Fäden der aktiven Schicht (2; 4; 4,8; 13a, 13b; 16, 17, 18) miteinander verbinden, wobei die Fäden der aktiven Schicht eine solche Länge und Stärke haben, dass sie die Fäden der passiven Schicht zum Reißen bringen, falls die Fäden der aktiven Schicht durch Sägezähne einer kraftbetriebenen Säge erfasst werden.

2. Einbruchsverhütungsanordnung gemäß Anspruch 1, wobei die Fäden der passiven Schicht (1; 6) die Fäden der aktiven Schicht (2; 4; 4, 8; 13a, 13b; 16, 17, 18) so miteinander verbinden, dass die Fäden der aktiven Schicht gezwungen werden, sich in einem schlangenförmigen oder gewundenen Muster zu erstrecken.

3. Einbruchsverhütungsanordnung (15) gemäß Anspruch 1 oder 2, wobei die Fäden der aktiven Schicht texturiert sind.

4. Einbruchsverhütungsanordnung (15) gemäß einem der Ansprüche 1-3, wobei die aktive Schicht aus Fäden erste Fäden (4), die dazu angeordnet sind, sich in einer ersten Richtung zu erstrecken, und zweite Fäden (8), die rechtwinklig zu den ersten Fäden (4) angeordnet sind, umfasst, und wobei mindestens die zweiten Fäden nicht schrumpfbar sind.

5. Einbruchsverhütungsanordnung (15) gemäß einem der Ansprüche 1-3, ferner umfassend eine Umhüllung (50), und wobei die Sägeverhinderungsschicht (20) innerhalb der Umhüllung (50) angeordnet ist.

6. Platte für ein Fahrzeug, wie z. B. einen Lastkraftwagen, umfassend eine Einbruchsverhütungsanordnung (15) gemäß einem der Ansprüche 1-5.

## Revendications

1. Dispositif de prévention d'intrusion (15), comprenant :
une couche de prévention de coupe (10) d'un matériau dur qui est impossible ou au moins difficile à couper, le matériau dur étant du bois ou un métal quelconque ;
une couche de prévention de sciage (20) d'un tissu textile, la couche de prévention de sciage comprenant une couche active de fils (2 ; 4 ; 4,8 ; 13a, 13b ; 16, 17, 18) qui, lors du contact avec des dents de scie d'une scie motorisée, sont disposés pour que les dents de scie se mettent en prise avec eux, et
une couche passive de fils (1 ; 6),
**caractérisé en ce que** les fils de la couche passive (1 ; 6) interconnectent les fils de la couche active (2 ; 4 ; 48 ; 13a, 13b ; 16, 17, 18), les fils de la couche active ayant une longueur et une résistance telles qu'ils provoquent la rupture des fils de la couche passive dans le cas où les fils de la couche active sont pris par les dents de scie d'une scie motorisée.

2. Dispositif de prévention d'intrusion selon la revendication 1, dans lequel les fils de la couche passive (1 ; 6) interconnectent les fils de la couche active (2 ; 4 ; 4,8 ; 13a, 13b ; 16, 17, 18) de telle sorte que les fils de la couche active soient forcés de s'étendre selon un motif en sinueux ou tortueux.

3. Dispositif de prévention d'intrusion (15) selon la revendication 1 ou la revendication 2, dans lequel les fils de la couche active sont texturés.

4. Dispositif de prévention d'intrusion (15) selon l'une quelconque des revendications 1 à 3, dans lequel la couche active de fils comprend des premiers fils (4) disposés pour s'étendre dans une première direction et des deuxièmes fils (8) disposés perpendiculairement aux premiers fils (4), et les deuxièmes fils au moins étant non rétractables.

5. Dispositif de prévention d'intrusion (15) selon l'une quelconque des revendications 1 à 3, comprenant en outre une enveloppe (50), et dans lequel la couche de prévention de sciage (20) est positionnée à l'intérieur de l'enveloppe (50).

6. Panneau pour un véhicule, tel qu'un camion, comprenant un dispositif de prévention d'intrusion (15) selon l'une quelconque des revendications 1 à 5.
